# DEMANDE DE BREVET EUROPEEN

(11) **EP 2 404 728 A1**
(43) Date de publication de la demande: **11.01.2012**
(21) Numéro de dépôt: 10168807.5
(22) Date de dépôt: 08.07.2010
(51) Int. Cl.: B29C 33/56, B29C 33/04, B29C 33/38, B29C 33/30, B29C 45/73, B29C 43/36, B29C 43/52

(54) **Moules d'injection ou de compression et comportant un circuit de regulation de temperature, insert amovible comportant un circuit de regulation et procede de fabrication de ces moules**

(71) Demandeur: ARRK Tooling Sermo France, 49280 La Seguiniere (FR)
(72) Inventeur: Rayer, Michaël, 49280 La Seguiniere (FR); Boutin, Robert, 49280 La Seguiniere (FR); Tronel, Michel, 49280 La Seguiniere (FR)
(74) Mandataire: Chaillot, Geneviève

(57) **Abrégé**

Moule (101) de compression ou d'injection dans lequel au moins l'un parmi la matrice et le noyau est constitué par l'assemblage démontable d'une coque (107, 120) présentant la forme moulante associée et définissant, sur sa face (107b, 120b) opposée à la face (107a, 120a) présentant la forme moulante, une cavité apte à être fermée par une plaque (105, 119), d'une plaque (105, 119) apte à fermer la cavité et d'un insert amovible (110, 122) supporté par la plaque et agencé pour remplir la cavité pour absorber les efforts de compression et de traction créés lors du moulage, au moins un circuit de régulation de température (125, 126) du noyau ou de la matrice étant réalisé à l'interface entre la face (107b, 120b) opposée à la face (107a, 120a) présentant la forme moulante et l'insert amovible associé (110).

## Description

La présente invention porte sur des moules pour le moulage par injection ou par compression ou par des techniques similaires de pièces en matière thermoplastique ou en matière plastique composite, en particulier en matière thermodurcie, ces pièces étant aussi bien des pièces de structure que des pièces de forme.

Ces deux techniques peuvent notamment être brièvement décrites comme suit :
Un cycle d'un moulage par compression comporte les principales étapes suivantes :
   (A) dans le moule ouvert, on dépose, sur la surface de moulage du noyau (a) la matière à mouler se présentant sous la forme de poudre, de granulés ou d'une masse plastique ; et/ou (b) un ou des renforts tels que fibres de verre coupées ou continues, tissus de verre déformables, préformes (renforts présentés à la forme et aux dimensions de la pièce à mouler), puis une quantité de résine généralement liquide nécessaire au remplissage de l'empreinte, le moule et la résine pouvant être chauffés ; et/ou (c) un semi-produit choisi parmi les mats imprégnés de résine (SMC - Sheet Moulding Compound) et les prémélanges (ou « premix ») tels que les compositions de moulage en vrac (BMC - Bulk Moulding Compound), les compositions de moulage en pâte (DMC - Dough Moulding Compound) et les masses à mouler sous forme de boudins extrudés ;
   (B) on ferme le moule en abaissant la matrice sur le noyau, sous l'action d'une presse, généralement une presse hydraulique, les produits contenus dans l'empreinte du moule étant comprimés et venant remplir totalement celle-ci ; et
   (C) après un laps de temps correspondant au durcissement de la pièce par polymérisation de la résine, on décharge la pièce, le cycle de moulage pouvant alors recommencer.
Le moulage par injection est un procédé suivant lequel une vis-piston se déplaçant dans un cylindre chauffé assure une préplastification et un dosage de la matière puis son injection directe dans le moule chaud par l'intermédiaire d'une buse et de canaux, le cycle de moulage comporte les principales étapes suivantes :
   (A) dans un moule fermé, on injecte dans l'empreinte la matière préplastifiée et dosée en conduisant généralement une injection sous une première pression, un dégazage, puis une fin d'injection sous une deuxième pression ;
   (B) après un laps de temps correspondant à la cuisson avec maintien en pression au début de celle-ci, on ouvre le moule et on éjecte la pièce moulée puis on referme le moule, le cycle de moulage pouvant alors recommencer.

On peut constater que ces techniques impliquent le chauffage ou le refroidissement du noyau et/ou de la matrice. Ce chauffage ou ce refroidissement est réalisé à l'aide d'un circuit de régulation de température dans lequel on amène à circuler un fluide de chauffage ou de refroidissement, notamment de l'huile ou de l'eau.

Dans le cas d'un moulage par compression, on chauffe le moule pour fournir des calories à la matière dans l'empreinte. Dans le cas d'un moulage par injection, on refroidit le moule pour capter les calories de la matière dans l'empreinte.

Les pièces moulées que l'on peut fabriquer avec les moules selon la présente invention sont très variées, appartenant à des secteurs industriels tels que l'industrie automobile, le secteur ferroviaire, la construction aéronautique et l'aérospatiale, la construction navale, l'industrie électrique, le domaine sanitaire, le mobilier, le bâtiment, les loisirs et les sports.

On peut citer, entre autres, dans le domaine automobile : les panneaux de portières, panneaux latéraux, panneaux de carrosserie, ailes, toits amovibles, hayons, panneaux de toiture, capots, rétroviseurs latéraux, assises et supports de sièges, contre-portes de voiture, dossiers de sièges, tablettes arrière, pare-chocs, amortisseurs, jantes ; dans le domaine du bâtiment : panneaux de protection et d'isolation, bardeaux, plaques translucides planes ou ondulées, les éléments de salles de bain, tels que baignoires, lavabos, douches, éviers.

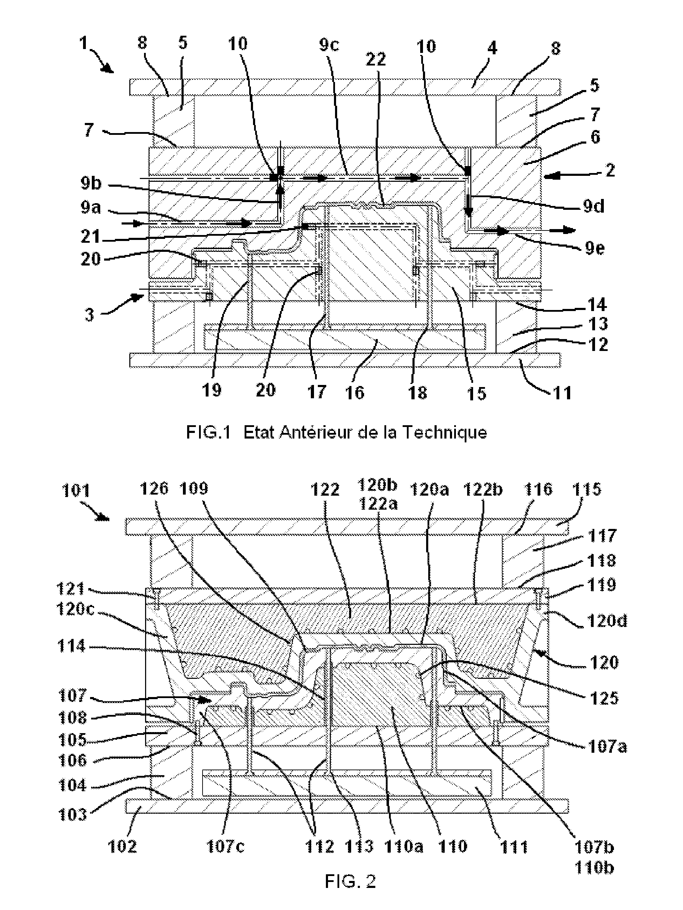

Les moules d'injection, de compression ou de technique similaire destinés à la fabrication de ces pièces qui sont conçus en technologie traditionnelle sont des moules métalliques réalisés à partir de blocs en acier coulé massif. On va maintenant décrire plus en détail, avec référence à la Figure 1, un moule traditionnel réalisé à partir de blocs d'acier et présentant un circuit de régulation de température simple et décrire les inconvénients d'un tel moule.

Le moule 1, représenté en position fermée sur la Figure 1, comporte un ensemble matrice 2 présentant une forme moulante et un ensemble noyau 3 présentant la forme moulante complémentaire de la forme moulante présentée par l'ensemble matrice 2. On va maintenant décrire les ensembles 2 et 3 en faisant référence à leur position représentée sur la Figure 1, à savoir pour un assemblage et un déplacement du moule selon un axe vertical.

L'ensemble matrice 2 comprend, de haut en bas si l'on regarde la Figure 1 : une semelle 4, des tasseaux 5 et une matrice 6. La matrice 6 est un monobloc d'acier usiné ayant la forme générale d'un parallélépipède rectangle, usiné en creux sur sa grande face inférieure pour constituer une forme moulante correspondant à la partie bombée de la pièce à mouler - une pièce pour coffre arrière avec logement pour roue de secours dans l'exemple représenté. La matrice 6 est assemblée en 7 aux tasseaux 5, au nombre de quatre, eux-mêmes assemblés en 8 à la semelle 4.

La semelle 4 présente des moyens (non représentés) permettant de la fixer, par exemple par vissage, à un plateau de presse, qui est le plateau mobile dans le cas d'un moule à déplacement vertical comme représenté sur la Figure 1, mais qui serait le plateau fixe de la presse dans le cas d'un moule à déplacement horizontal. Ces moyens de fixation ne seront pas décrits plus en détail car ils sont bien connus des moulistes.

Le bloc d'acier constituant la matrice 6 comprend un circuit de régulation de température 9 constitué dans l'exemple représenté par cinq segments de canal 9a, 9b, 9c, 9d et 9e, ces segments de canal étant reliés entre eux afin de former un chemin de passage pour un fluide. Le sens de circulation du fluide est représenté par des flèches.

Les segments de canal 9a, 9b, 9c, 9d et 9e sont obtenus par perçage ou forage du bloc d'acier, à partir d'une des surfaces externes du bloc d'acier. Les opérations de forage ou de perçage génèrent donc des trous dont parfois seule une partie constitue un segment de canal. Ainsi, les parties issues du perçage ou forage du segment de canal 9b et du segment de canal 9d débouchent sur la face supérieure de la matrice 6, et une partie issue du perçage ou forage du segment de canal 9c débouche sur l'une des faces latérales de la matrice 6.

Ceci oblige à disposer des bouchons filetés 10 au niveau des intersections entre deux perçages, scellant de façon étanche ces parties débouchant sur l'extérieur vis-à-vis du fluide circulant dans le circuit de régulation de température.

Le circuit de régulation de température représenté sur la Figure 1 est un circuit de régulation extrêmement simple. Dans le cas de pièces à mouler dont les formes imposent la réalisation de plusieurs circuits de régulation de température plus compliqués et pouvant se croiser, ces opérations de perçage et de mise en place des bouchons filetés, appelées « bouchonnage », prennent beaucoup de temps à réaliser et à concevoir et mobilisent un personnel qualifié et expérimenté. Ceci a un impact négatif sur le coût de fabrication du moule.

L'ensemble noyau 3 comprend, de bas en haut si l'on regarde la Figure 1 : une semelle 11 assemblée en 12 à des tasseaux 13, eux-mêmes assemblés en 14 à un noyau 15.

La semelle 11 a la forme générale d'une plaque rectangulaire. Elle présente des moyens de fixation, par exemple par vissage, au plateau de presse fixe dans le cas d'un moule à déplacement vertical, ou au plateau de presse mobile dans le cas d'un moule à déplacement horizontal.

Les tasseaux 13, au nombre de quatre, sont assemblés aux quatre coins de façon à délimiter, entre la face inférieure du noyau 15 et la face supérieure de la semelle 11, un espace vide ou cage d'éjection, constituant un passage mécanique dans lequel se déplace une plaque d'éjection 16, entre une position où elle vient en appui sur la face supérieure de la semelle 11 et une position d'éjection comme cela sera décrit ci-après.

La plaque d'éjection 16 porte des éjecteurs 17 assemblés à celle-ci en 18.

Le noyau 15 est également constitué par un bloc en acier massif dont la face inférieure est assemblée aux faces supérieures des tasseaux 13 et dont la face supérieure est configurée pour présenter la forme moulante complémentaire de la forme moulante présentée par la matrice 6. Les éjecteurs 17, disposés verticalement dans l'exemple représenté, traversent le noyau 15 à travers des ouvertures 19 prévues pour le passage libre des éjecteurs 15.

Le noyau 15 présente également un circuit de régulation de température composé de segments de canal obtenus par perçage ou forage à partir des faces externes du bloc d'acier.

Comme dans le cas de la matrice 6, certains perçages sont bouchés à l'aide de bouchons filetés 20 à l'intersection avec un autre perçage de façon à sceller de façon étanche la partie débouchant sur l'extérieur vis-à-vis du fluide circulant dans le circuit de régulation de température.

Dans certains cas, il est nécessaire de percer à partir de la forme moulante, comme on peut le voir dans le cas du circuit de régulation de température du noyau 15. Dans ces cas-là, afin de conserver la fonction moulante de cette face du noyau 15, il est nécessaire d'ajouter dans le perçage, après y avoir introduit un bouchon fileté 20, un cylindre 21, par exemple d'acier ou de cuivre, dont l'extrémité faisant saillie hors de la forme moulante est arasée afin d'obtenir une forme moulante continue.

Cette opération rallonge le bouchonnage du bloc d'acier, impliquant encore une augmentation du coût de fabrication du moule.

A l'ouverture du moule 1, la plaque d'éjection 16 est actionnée pour se soulever et permettre l'éjection de la pièce moulée 22 de façon connue en soi.

Les moules en acier tels que celui qui vient d'être décrit, présentent un poids très important. Ils sont réalisés à partir de blocs d'acier de très grandes dimensions, lesquels doivent être soumis à des phases d'usinage - usinage grossier puis usinage de finition - pour former sur l'une des faces la forme moulante, ces phases d'usinage enlevant de la matière qui est définitivement perdue.

Ces blocs d'acier doivent également être soumis à un bouchonnage extrêmement coûteux en temps, un bouchonnage pouvant prendre plusieurs jours, et en main-d'oeuvre, le personnel en charge du bouchonnage étant qualifié et expérimenté. De plus, l'acier enlevé du bloc d'acier par perçage est perdu, et le perçage et l'usinage dans de l'acier nécessitent des outils adaptés.

Dans certains cas, il serait idéalement nécessaire, pour obtenir une régulation optimale du moule, de réaliser plusieurs circuits de régulation se croisant. Cependant, si de trop nombreux perçages ou forages sont réalisés, la résistance mécanique du bloc d'acier peut diminuer jusqu'à provoquer l'effondrement du bloc.

En outre, il est n'est pas possible de réaliser un circuit de régulation de température présentant des courbes correspondant à la forme moulante de la matrice. Ainsi, une perte de charge de l'écoulement du fluide se produit au niveau des angles droits du circuit, c'est-à-dire qu'il n'y a pas une diffusion homogène de la chaleur du circuit vers la pièce à mouler dans le cas d'un moulage par compression et de la chaleur de la pièce à mouler vers le circuit dans le cas d'un moulage par injection.

De plus, une simple erreur de calcul de distance ou d'inclinaison des différents perçages, ou une simple erreur lors de l'exécution des opérations de perçage peut amener, en raison des grandes dimensions des blocs d'acier, le fond d'un perçage à se situer à plusieurs centimètres de sa position cible, pouvant par exemple conduire ce perçage à déboucher de façon non prévue dans un autre perçage. Il est extrêmement difficile de remédier à de telles erreurs. La seule solution consiste souvent à recouler le bloc d'acier et à reprendre le bouchonnage depuis le début, conduisant à une perte de temps et une augmentation du coût de fabrication du moule pouvant affecter sensiblement la compétitivité du fabricant.

Le bloc d'acier constituant le noyau doit également être soumis à des phases d'usinage afin d'intégrer la fonction d'éjection de la pièce moulée, assurée par les éjecteurs 17 portés par la plaque d'éjection 16, cette intégration consistant en la réalisation des ouvertures 19.

Le poids important des blocs constituant le moule, nécessaire pour en garantir les caractéristiques mécaniques, rend leur manipulation difficile et leur transport malaisé et coûteux.

L'acier étant acheté au poids, la fabrication du moule est d'autant plus coûteuse que le poids des blocs constituant le moule est important. Les pièces à mouler étant dans certains cas de très grandes dimensions et les blocs d'acier constituant le moule étant de dimensions correspondantes, la fabrication du moule peut dans certains cas devenir trop coûteuse par rapport à la pièce à mouler. Ceci est d'autant plus problématique qu'une partie de cet acier est enlevée du bloc pendant le bouchonnage et est définitivement perdue.

De plus, dans l'opération de moulage, les masses en mouvement sont importantes, avec, pour conséquence des efforts importants appliqués à la presse, réduisant par là la durée de vie de cette dernière.

La Société déposante a recherché une solution à ces différents problèmes provenant du poids, des dimensions importantes, de la complexité de réalisation d'un circuit de régulation de température et de l'impossibilité de réaliser un circuit de réalisation optimal, épousant la forme moulante afin d'éviter au maximum les pertes de charge, dans les blocs composant les moules. Elle a découvert qu'il était possible de résoudre ces problèmes en remplaçant les blocs d'acier utilisés depuis toujours par l'assemblage démontable d'une coque, d'une plaque, d'un insert amovible de poids plus léger que l'acier, notamment à base non métallique, notamment en un produit coulé et durci en venant remplir l'espace formé entre la coque et la plaque dans des conditions où il restera amovible, et d'un circuit de régulation de température à l'interface entre la coque et l'insert amovible.

Il n'était pas évident d'introduire une telle technologie dans ce domaine des moules d'injection et de compression pour lesquels des efforts extrêmement importants doivent être absorbés appelant donc naturellement l'emploi de blocs massifs d'acier.

L'ensemble selon l'invention formant la matrice et/ou le noyau venant remplacer les blocs massifs, la diminution de la quantité de métal utilisée réduit d'autant l'énergie utilisée pour l'élaboration de ces matériaux et le coût de fabrication du moule. Le bilan carbone est amélioré. De plus, les matériaux utilisés pour réaliser l'insert, consistant en matériaux de type béton mis en place par coulée et durcissement in situ, sont beaucoup moins coûteux que l'acier constituant traditionnellement les blocs massifs.

Etant mis en place par coulée, donc sans nécessiter d'usinage spécifique, le matériau de l'insert autorise l'intégration des fonctions mécaniques telles que manutentions et éjection. De conductibilité largement inférieure à celle de l'acier, il participe à l'isolation thermique du moule.

La réduction du poids final du moule a un fort impact favorable sur le transport, le facilitant et en diminuant le coût. De plus, les pièces individuelles étant moins encombrantes, les volumes à transporter sont moindres. Il a ainsi pu être observé que cette technologie permet d'abaisser entre 20 et 30 % le poids d'un moule traditionnel.

Le poids du moule étant abaissé, les masses du moule en mouvement lors du moulage sont réduites, ce qui permet de moins solliciter la presse et donc d'allonger sa durée de vie.

D'autres avantages importants de l'invention sont que la fabrication des moules selon l'invention demande moins de temps que l'usinage de blocs massifs et que les modifications et évolutions des moules, par exemple si une pièce à mouler doit subir des modifications ou évolutions de forme, sont facilitées. L'utilisation d'une coque est alors un avantage important, car il n'est alors plus nécessaire de manipuler de gros blocs d'acier ou de fonte. Ainsi, lorsqu'il est nécessaire de modifier la coque pour lui ajouter un creux moulant, il suffit de réaliser ce creux sur la face de la coque présentant la forme moulante, de rapporter un pavé de même matériau que la coque à l'opposé de ce creux, de façon à conserver la résistance mécanique de la coque, et de réaliser un creux correspondant dans l'insert amovible. Le fait que l'insert ne soit pas réalisé en métal permet de simplifier les étapes d'usinage imposées par des modifications de la pièce à mouler, et donc de diminuer leur coût.

Ainsi, alors que, dans l'état antérieur de la technique, on part de gros blocs d'acier obtenus par coulée que l'on usine ensuite, la fabrication du moule selon l'invention est plus facile à effectuer car elle consiste en l'usinage de coques de moindre encombrement chacune, plus faciles à manipuler, puis la réalisation aisée d'inserts amovibles à base non métallique et d'un ou plusieurs circuits de régulation avantageusement formés par des rainures à la surface de l'insert destinée à venir s'appliquer contre la surface interne de la coque associée. En particulier, les blocs d'acier doivent être commandés auprès d'usines souvent éloignées de l'endroit où sont fabriqués les moules.

Un autre avantage complémentaire, non négligeable, de l'utilisation d'une coque et d'un insert à base non métallique amovible est qu'en cas de modifications importantes de la pièce à mouler, seule la coque, et éventuellement l'insert, doit être changée, ce qui présente un coût beaucoup plus faible que dans le cas des moules traditionnels qui ne peuvent pas être réutilisés et pour lesquels la construction d'un nouveau moule est nécessaire, et d'autant plus si un ou plusieurs circuits de régulation de température ont été réalisés dans le moule, le bouchonnage étant, comme indiqué ci-dessus, très coûteux.

Encore un autre avantage important du point de vue de la régulation de la température du moule est que l'on obtient une régulation de température optimale du fait de la position du circuit de régulation de température à l'interface entre l'insert amovible et la coque présentant la forme moulante. Ainsi, le circuit de régulation de température présente des performances optimales car il est situé au plus près de la forme moulante, ce qui permet d'obtenir une diffusion homogène de la chaleur, les pertes de charge étant en outre réduites par rapport à un circuit foré dans la masse.

L'utilisation d'un insert amovible ayant une conductivité thermique inférieure à celle de l'acier a également un effet d'isolation du circuit de régulation de température et de la coque, permettant de réduire la quantité de calories nécessaire pour refroidir ou chauffer la coque.

Le fait de ne pas percer le circuit de régulation de température dans la masse de l'insert permet également d'éviter les problèmes de chute de résistance mécanique conduisant à un effondrement du moule, et également de réaliser de nombreux circuits de régulation de température ayant un parcours optimal, pouvant se croiser, sans diminuer la résistance mécanique du moule.

Enfin, le circuit de régulation de température peut être obtenu par usinage d'un réseau de rainures, formant le circuit de régulation de température, sur la face de l'insert amovible destinée à entrer en contact avec la face opposée à la face présentant la forme moulante de la coque, ou par surmoulage de ce réseau de rainures lors de la fabrication de l'insert amovible, permettant ainsi d'éviter la phase de bouchonnage présentant les inconvénients mentionnés ci-dessus, et ainsi de diminuer fortement le coût de fabrication du moule.

La présente invention a donc pour objet un moule de compression ou d'injection, comprenant une matrice dont une face présente une forme moulante et dont l'autre face porte des moyens de fixation à un plateau de presse, un noyau dont une face présente la forme moulante complémentaire de la forme moulante présentée par la matrice et dont l'autre face porte des moyens de fixation à un plateau de presse opposé, et un dispositif d'éjection de la pièce moulée constitué par une plaque d'éjection et au moins un éjecteur traversant le noyau, caractérisé par le fait qu'au moins l'un parmi la matrice et le noyau est constitué par l'assemblage démontable d'une coque présentant la forme moulante associée et définissant, sur sa face opposée à la face présentant la forme moulante, une cavité apte à être fermée par une plaque, d'une plaque apte à fermer la cavité et d'un insert amovible supporté par la plaque et agencé pour remplir la cavité pour absorber les efforts de compression et de traction créés lors du moulage, le ou les éjecteurs traversant à la fois la plaque de noyau, l'insert amovible de noyau et la coque de noyau, au moins un circuit de régulation de température du noyau ou de la matrice étant réalisé à l'interface entre la face opposée à la face présentant la forme moulante et l'insert amovible associé.

La ou chaque coque est avantageusement réalisée en un matériau de résistance suffisante pour satisfaire aux exigences de moulage de la pièce à mouler, en particulier en acier ou fonte.

Selon un mode de réalisation particulier de la présente invention, les faces des coques présentant les formes moulantes sont de forme complémentaire, assurant la fermeture étanche de l'empreinte formée par les deux formes moulantes, et les coques portent, à leur périphérie, des jupes pour former la cavité recevant l'insert amovible.

La coque peut être obtenue par fonderie, usinage, projection métallique, stéréolithographie ou frittage.

L'insert amovible est avantageusement réalisé en un matériau de résistance suffisante pour supporter les efforts de compression et de traction créés lors de l'opération de moulage, en particulier par coulée d'un béton, tel qu'un béton fibré haute performance ou ultra-haute performance, ou encore un béton polymère.

Le béton fibré haute performance ou ultra-haute performance (BFUP) est obtenu par malaxage avec l'eau d'un mélange cimentaire et granulaire ayant des compositions granulaires spécifiques (diamètre maximal réduit), d'adjuvants superplastifiants et de fibres, telles que des fibres métalliques (acier), de carbone, de verre, de matière synthétique. La coulée ou gâche obtenue est versée dans une coque selon l'invention dans les conditions décrites ci-après. Le béton fibré haute performance ou ultra-haute performance présente ainsi les avantages d'une très grande ouvrabilité, d'une déformabilité sans rupture fragile et d'une résistance à la microfissuration qui sont meilleures que celles d'un béton classique. Sa résistance en flexion peut aller jusqu'à 45 MPa et sa résistance à la compression, jusqu'à 200 MPa.

Le béton polymère est constitué par le mélange d'une résine et d'agrégats auquel viennent s'ajouter des adjuvants tels qu'un débullant pour éliminer les bulles qui peuvent fragiliser le béton, un agent de couplage pour améliorer l'adhérence résine/agrégats, un durcisseur et un accélérateur de durcissement pour accélérer le durcissement de la résine. Au moins le durcisseur est ajouté au moment de l'emploi. La résine est notamment choisie parmi les résines époxy, les résines polyesters isophtaliques et polyesters orthophtaliques, les résines acryliques et les résines vinylester. On peut notamment citer une résine époxy avec un durcisseur, une résine polyester insaturée isophtalique, une résine polyester insaturée orthophtalique avec un adjuvant dit « low profile ». Les agrégats sont, de préférence, de nature alluvionnaire, choisis notamment parmi les sables de quartz, le basalte, le granit, le feldspath, le mica et le spath.

Selon un mode de réalisation particulier, le circuit de régulation est formé par au moins une rainure pratiquée dans la surface d'une coque et/ou de son insert associé, de préférence dans la surface de l'insert.

Selon un mode de réalisation particulier de la présente invention, le moule défini ci-dessus est destiné à un moulage par injection et est caractérisé par le fait qu'il comprend en outre un dispositif d'injection de matière dans l'empreinte, passant à travers des orifices pratiqués respectivement dans la plaque de matrice, l'insert amovible de matrice et la coque de matrice.

La présente invention porte également sur un insert destiné à équiper un moule tel que défini ci-dessus, caractérisé par le fait qu'il est apte à remplir la cavité formée par la face opposée à la face présentant la forme moulante de la coque, qu'il est apte à être retiré de celle-ci et à être replacé dans celle-ci et qu'il présente, sur sa face destinée à venir en contact avec la cavité, au moins une rainure apte à former un circuit de régulation de température de la coque associée.

La présente invention porte également sur un procédé de fabrication d'un moule tel que défini ci-dessus, caractérisé par le fait que l'on définit les formes moulantes de matrice et de noyau, que l'on réalise au moins une coque présentant la forme moulante associée et définissant, sur sa face opposée à la face présentant la forme moulante, une cavité apte à être fermée par une plaque, que l'on réalise un insert amovible associé tel que défini ci-dessus, que l'on réalise au moins un circuit de régulation de température de coque sur la face de l'insert amovible destinée à venir contre la cavité, que l'on introduit l'insert amovible présentant le ou les circuits de régulation de température de coque dans ladite cavité et que l'on fixe une plaque à la coque associée de façon à fermer la cavité avec l'insert amovible présentant le ou les circuits de régulation de température de coque placé dans celle-ci.

On peut obtenir la coque par fonderie, usinage, projection métallique, stéréolithographie ou frittage.

Conformément à un mode de réalisation particulier de la présente invention, pour réaliser l'insert amovible associé à la cavité et présentant le ou les circuits de régulation, on fixe temporairement au moins un profilé de matériau sur la face opposée à la face présentant la forme moulante de la coque, le ou les profilés ayant la section de la ou des rainures formant le ou les circuits de régulation, on dispose un moyen de démoulage, tel qu'un agent démoulant appliqué notamment par projection, sur la face opposée à la face présentant la forme moulante de la coque et sur le ou les profilés de matériau, on coule dans la cavité le matériau destiné à former l'insert amovible de telle sorte qu'il remplit la cavité et que le ou les circuits de régulation sont surmoulés, on laisse ledit matériau durcir dans la cavité, on retire l'insert amovible une fois durci et on retire le ou les profilés de matériau.

Conformément à un mode de réalisation particulier de la présente invention, pour réaliser l'insert amovible associé à la cavité et présentant le ou les circuits de régulation, on dispose un moyen de démoulage, tel qu'un agent démoulant appliqué notamment par projection, sur la face opposée à la face présentant la forme moulante de la coque, on coule dans la cavité le matériau destiné à former l'insert amovible de telle sorte qu'il remplit la cavité, on laisse ledit matériau durcir dans la cavité, on retire l'insert amovible une fois durci et on usine une ou des rainures sur la face de l'insert amovible destinée à venir en contact avec la face opposée à la face présentant la forme moulante de la coque de façon à réaliser un ou plusieurs circuits de régulation.

Lorsque l'insert amovible est destiné à être associé à la coque de noyau, on dispose, afin de réaliser les orifices traversants destinés à laisser passer les éjecteurs et avant de couler le matériau formant l'insert, des tubes en acier ou matière plastique de telle sorte que leur âme soit alignée avec les orifices pratiqués dans la plaque de noyau et la coque de noyau lorsque la plaque de noyau, l'insert amovible de noyau et la coque de noyau sont assemblés. Ainsi, lors de la coulée du matériau formant l'insert, ce matériau remplit l'espace libre formé par la cavité et les surfaces externes des tubes.

Lorsque le moule est destiné à un moulage par injection, on obtient de façon analogue, dans l'insert amovible de matrice, un orifice traversant destiné à recevoir un tube en acier ou matière plastique laissant passer le dispositif d'injection de matière.

Pour mieux illustrer l'objet de la présente invention, on va en décrire ci-après un mode de réalisation particulier avec référence au dessin annexé.

Sur ce dessin,
- la Figure 1 est une vue schématique d'un moule d'injection ou de compression fabriqué par usinage de blocs d'acier conformément à l'état antérieur de la technique et présentant des circuits de régulation de température de moule forés dans la masse, le moule étant représenté dans sa position fermée ;
- la Figure 2 est une vue analogue à la Figure 1 d'un moule comportant une matrice et un noyau réalisés conformément à la présente invention, le moule étant représenté dans sa position fermée ;

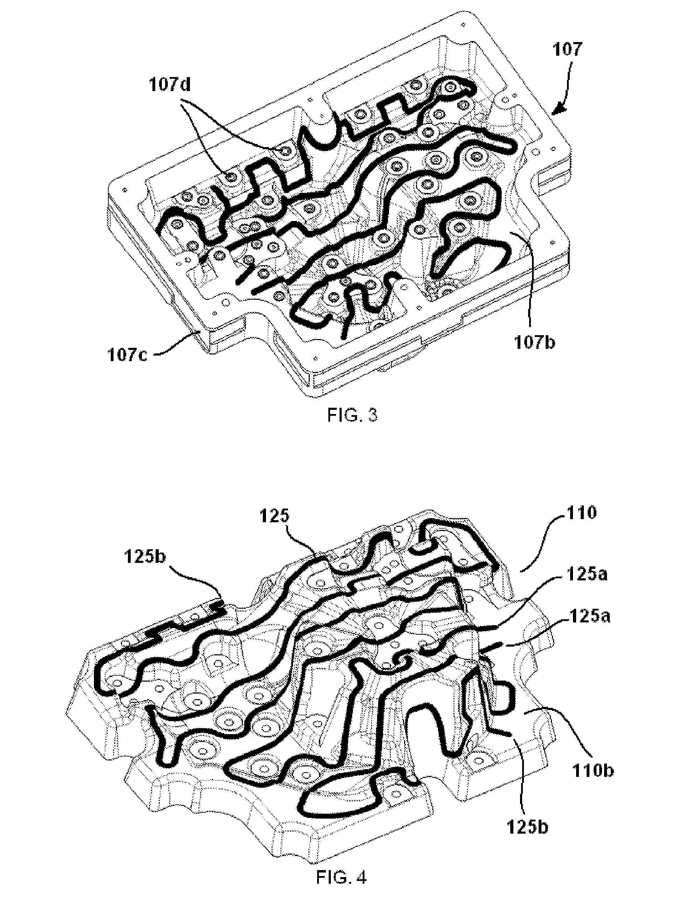

- la Figure 3 est une vue en perspective de la coque de noyau du moule représenté sur la Figure 2, la coque étant vue de dessous de façon à représenter la cavité de la coque de noyau et le trajet correspondant au circuit de régulation de température étant représenté en trait noir d'une plus grande épaisseur ; et
- la Figure 4 est une vue en perspective de l'insert amovible associé à la coque de noyau représentée sur la Figure 3, l'insert amovible étant vu de dessus de façon à représenter la face de l'insert amovible venant en contact avec la cavité de la coque de noyau, le trajet du circuit de régulation de température étant représenté en trait noir d'une plus grande épaisseur.

Si l'on se réfère aux Figures 2 à 4, on peut voir que le moule 101 de compression ou d'injection selon la présente invention comprend à sa base, de façon analogue aux moules traditionnels décrits ci-dessus, une semelle 102 sur laquelle sont assemblés en 103 des tasseaux 104.

La semelle 102 a la forme générale d'une plaque rectangulaire. Les tasseaux 104 sont disposés à chaque coin de la semelle 102 et ont la même hauteur.

Les tasseaux 104 supportent sur leur face supérieure une plaque 105 de forme généralement rectangulaire, dont la face inférieure est assemblée en 106 aux tasseaux 104.

Une coque 107 est rendue solidaire de la plaque 105 par des vis 108 et sert de noyau proprement dit du moule 101. Elle présente ainsi sur sa face supérieure 107a une forme moulante adaptée à la pièce à mouler 109. La face inférieure 107b de la coque de noyau 107 a sensiblement la même forme que la face supérieure 107a, de telle sorte que l'épaisseur de la coque est globalement constante.

La forme de la coque de noyau 107 est telle que la face inférieure 107b forme une cavité fermée par la plaque 105, cette cavité recevant un insert 110. Ainsi, la coque de noyau 107 présente une petite jupe 107c délimitant la périphérie de la cavité. La coque de noyau 107 est fixée à la plaque 105 par l'intermédiaire de cette petite jupe 107c.

L'insert 110 remplit totalement la cavité formée par la face inférieure 107b de la coque de noyau 107 et est apte à être retiré de celle-ci et à être replacé dans celle-ci selon les besoins. L'insert 110 présente ainsi une face inférieure 110a reposant sur la face supérieure de la plaque 105 et une face supérieure 110b complémentaire de la face inférieure 107b de la coque de noyau 107, comme on peut le voir sur la Figure 4. Dans ce mode de réalisation, l'insert 110 est réalisé en béton fibré ultra-haute performance.

Après que la coque de noyau 107 a été fixée par vissage à la plaque 105, l'ensemble formé par la plaque 105, l'insert amovible 110 et la coque de noyau 107 se comporte comme un ensemble rigide monobloc.

On voit donc que le noyau 15 des moules traditionnels décrits ci-dessus a été remplacé par la plaque 105, l'insert amovible 110 et la coque de noyau 107. La résistance mécanique aux efforts de compression et de traction créés lors du moulage, auparavant fournie par le bloc d'acier constituant le noyau, est maintenant assurée par l'insert amovible 110 supportant la coque de noyau 107 dont le matériau a une résistance suffisante pour satisfaire aux exigences de moulage de la pièce à mouler 109.

Afin d'intégrer la fonction d'éjection de la pièce moulée 109, une plaque d'éjection 111 est placée dans l'espace vide ou cage d'éjection formé entre la face supérieure de la semelle 102 et la face inférieure de la plaque 105. Cet espace vide constitue un passage mécanique dans lequel se déplace la plaque d'éjection 111, entre une position où elle vient en appui sur la face supérieure de la semelle 102 et une position d'éjection de la pièce moulée 109.

La plaque d'éjection 111 porte des éjecteurs 112 assemblés à celle-ci en 113. Des orifices traversants sont pratiqués dans la plaque 105 pour le passage libre des éjecteurs 112.

Afin de permettre le passage des éjecteurs 112 à travers l'insert amovible 110, sont pratiqués dans ce dernier des orifices traversants dans lesquels sont reçus des tubes en acier ou en matière plastique 114. Les éjecteurs 112 passent ainsi à travers ces tubes 114. Des orifices traversants sont également pratiqués dans la coque 107 dans la continuité des précédents afin de permettre le passage libre des éjecteurs 112.

A l'ouverture du moule 101, la plaque d'éjection 111 est actionnée pour se soulever et permettre l'éjection de la pièce moulée 109 de façon connue en soi.

On peut également voir qu'un circuit de régulation de température de noyau 125 est formé par des rainures pratiquées dans la face 110b de l'insert amovible de noyau 110, lesquelles seront fermées, en position de montage, par la face 107b de la coque de noyau 107. Ce circuit se situe donc à l'interface entre l'insert amovible 110 et la face 107b de la coque de noyau 107 lorsque le moule 101 est dans la position fermée.

Le seul circuit de régulation de température de noyau 125 est donc formé à partir de rainures qui débouche sur la face 110b et dont la section est en demi-cercle ou autre forme similaire. Comme on peut le voir sur les Figures 3 et 4, le circuit serpente sur la face 107b de l'insert amovible 110 de façon à épouser de façon optimale la forme moulante présentée par la face 107a de la coque 107.

Le circuit de régulation de température comprend deux entrées 125a par lesquelles est introduit le fluide de chauffage dans le cas d'un moulage par compression, ou de refroidissement dans le cas d'un moulage par injection, et deux sorties 125b par lesquelles le fluide de chauffage ou de refroidissement sort du circuit.

Ce circuit de régulation de température permet d'obtenir des performances de chauffage ou de refroidissement optimales de la coque de noyau 107.

Si l'on se réfère encore à la Figure 2, on peut voir qu'à sa partie supérieure, le moule 101 comprend, comme le moule traditionnel décrit ci-dessus, une semelle 115 de forme généralement rectangulaire et présentant des moyens de fixation (non représentés) à un plateau de presse.

La face inférieure de la semelle 115 est assemblée en 116 à la face supérieure de tasseaux 117. Les tasseaux 117 sont disposés aux quatre coins de la semelle 115 et ont la même hauteur.

La face inférieure des tasseaux 117 est assemblée en 118 à la face supérieure d'une plaque 119 généralement rectangulaire.

De façon analogue au noyau du moule 101 selon la présente invention, une coque 120 est rendue solidaire de la plaque 119 par des vis 121.

La coque 120 sert de matrice proprement dite du moule 101. Elle présente ainsi sur sa face inférieure 120a la forme moulante complémentaire de la forme moulante portée par la face supérieure 107a de la coque de noyau 107. La face supérieure 120b de la coque de matrice 120 a sensiblement la même forme que la face inférieure 120a, de telle sorte que l'épaisseur de la coque est globalement constante.

La forme de la coque de matrice 120 est telle que la face supérieure 120b forme une cavité fermée par la plaque 119, cette cavité recevant un insert amovible 122. Ainsi, dans l'exemple représenté sur la Figure 2, la coque de matrice 120 présente une jupe 120c se terminant en une collerette périphérique 120d par l'intermédiaire de laquelle la coque de matrice 120 est reliée à la plaque 119 par les vis 121.

L'insert 122 remplit totalement la cavité formée par la face supérieure 120b de la coque de matrice 120 et est apte à être retiré de celle-ci et à être replacé dans celle-ci selon les besoins. L'insert 122 présente ainsi une face supérieure 122b sur laquelle s'appuie la face inférieure de la plaque 119 et une face inférieure 122a complémentaire de la face supérieure 120b de la coque de matrice 120. Dans ce mode de réalisation, l'insert 122 est également réalisé en béton fibré ultra-haute performance.

Après que la coque de matrice 120 a été fixée par vissage à la plaque 119, l'ensemble formé par la plaque 119, l'insert amovible 122 et la coque de matrice 120 se comporte comme un ensemble rigide monobloc.

On voit donc que la matrice 6 des moules traditionnels décrits ci-dessus a été remplacée par la plaque 119, l'insert amovible 122 et la coque de matrice 120. La résistance mécanique aux efforts de compression et de traction créés lors du moulage, auparavant fournie par le bloc d'acier constituant la matrice, est maintenant assurée par l'insert amovible 122 en contact avec la coque de matrice 120 dont le matériau a une résistance suffisante pour satisfaire aux exigences de moulage de la pièce à mouler 109.

Si le moule 101 est destiné à un moulage par injection, des orifices traversants sont respectivement pratiqués dans la plaque 119 et la coque de matrice 120 afin de permettre le passage d'un dispositif d'injection de matière, et l'insert de matrice 122 présente un orifice traversant recevant un tube en acier ou en matière plastique à travers lequel peut passer le dispositif d'injection de matière.

Un circuit de régulation de température de matrice 126 est réalisé à l'interface entre la face 122a de l'insert de matrice 122 et la face supérieure 120b de la coque de matrice 120, de façon analogue au circuit de régulation de température de noyau 125 décrit ci-dessus. Ce circuit de régulation de température permet d'obtenir des performances de chauffage ou de refroidissement optimales de la coque de matrice 120.

Lorsque le moule 101 est dans sa position fermée, les formes moulantes portées par la coque de noyau 107 et la coque de matrice 120 forment une empreinte dans laquelle est formée la pièce à mouler 109. On peut voir que la forme de la face supérieure 107a de la coque de noyau 107 et que la forme de face inférieure 120a de la coque de matrice 120 sont complémentaires sur l'extérieur de l'empreinte de façon à fermer celle-ci de façon étanche, une partie de la face inférieure 120a venant s'adapter autour de la face externe de la jupe 107c.

Ainsi, lorsque l'on souhaite fabriquer une pièce en matière plastique par moulage par injection à l'aide du moule 101, on injecte dans l'empreinte, une fois le moule 101 fermé et tout en refroidissant la coque de noyau 107 et la coque de matrice 120 en amenant un fluide de refroidissement à circuler dans les circuits de régulation de température 125 et 126, de la matière préplastifiée et dosée en conduisant généralement une injection sous une première pression, un dégazage, puis une fin d'injection sous une deuxième pression. Après un laps de temps, on ouvre le moule 101 et on éjecte la pièce moulée 109, puis on referme le moule, le cycle de moulage pouvant alors recommencer.

Lorsque l'on souhaite fabriquer une pièce en matière plastique par moulage par compression à l'aide du moule 101, on dépose, sur la face 107a de la coque de noyau 107, la matière à mouler se présentant, par exemple, sous la forme de poudre, de granulés ou d'une masse plastique, on chauffe la coque de noyau 107 et la coque de matrice 120 en amenant un fluide chaud à circuler dans les circuits de régulation de température 125 et 126, puis on ferme le moule en abaissant l'ensemble matrice sur la coque noyau 107, ce qui comprime la matière à mouler dans l'empreinte et l'amène à la remplir totalement, et, après un laps de temps correspondant au durcissement de la pièce, on éjecte la pièce moulée 109 par les éjecteurs 112 après avoir ouvert le moule 101 en relevant l'ensemble matrice.

On voit donc que l'on a constitué un moule de compression ou d'injection, dans lequel les blocs d'acier formant la matrice et le noyau avec des circuits de régulation de température forés dans la masse de l'état antérieur de la technique ont chacun été remplacés par un ensemble plaque - insert amovible adapté - coque, permettant de diminuer fortement la quantité d'acier utilisé, de faciliter les modifications devant être apportés à la forme moulante, de grandement simplifier la réalisation des circuits de régulation de température et de les rendre optimaux, car ceux-ci sont formés par un système de rainures dans l'insert comme décrit ci-dessus. Ceci permet également de diminuer fortement le coût de fabrication du moule.

Il est bien entendu que les modes de réalisation qui ont été décrits ci-dessus ont été donnés à titre indicatif et non limitatif et que des modifications peuvent être apportées sans que l'on s'écarte pour autant du cadre de la présente invention.

## Revendications

1. Moule (101) de compression ou d'injection, comprenant une matrice dont une face présente une forme moulante et dont l'autre face porte des moyens de fixation à un plateau de presse, un noyau dont une face présente la forme moulante complémentaire de la forme moulante présentée par la matrice et dont l'autre face porte des moyens de fixation à un plateau de presse opposé, et un dispositif d'éjection de la pièce moulée constitué par une plaque d'éjection (111) et au moins un éjecteur (112) traversant le noyau, **caractérisé par le fait qu'**au moins l'un parmi la matrice et le noyau est constitué par l'assemblage démontable d'une coque (107, 120) présentant la forme moulante associée et définissant, sur sa face (107b, 120b) opposée à la face (107a, 120a) présentant la forme moulante, une cavité apte à être fermée par une plaque (105, 119), d'une plaque (105, 119) apte à fermer la cavité et d'un insert amovible (110, 122) supporté par la plaque et agencé pour remplir la cavité pour absorber les efforts de compression et de traction créés lors du moulage, le ou les éjecteurs (112) traversant à la fois la plaque de noyau (105), l'insert amovible de noyau (110) et la coque de noyau (107), au moins un circuit de régulation de température (125, 126) du noyau ou de la matrice étant réalisé à l'interface entre la face (107b, 120b) opposée à la face (107a, 120a) présentant la forme moulante et l'insert amovible associé (110).

2. Moule selon la revendication 1, **caractérisé par le fait que** la ou chaque coque (107, 120) est réalisée en un matériau de résistance suffisante pour satisfaire aux exigences de moulage de la pièce à mouler (109), en particulier en acier ou fonte.

3. Moule selon l'une des revendications 1 à 2, **caractérisé par le fait que** les faces (107a, 120a) des coques présentant les formes moulantes sont de forme complémentaire, assurant la fermeture étanche de l'empreinte formée par les deux formes moulantes, et que les coques (107, 120) portent, à leur périphérie, des jupes (107c, 120c) pour former la cavité recevant l'insert amovible (110, 122).

4. Moule selon l'une des revendications 1 à 3, **caractérisée par le fait que** la coque (107, 120) est obtenue par fonderie, usinage, projection métallique, stéréolithographie ou frittage.

5. Moule selon l'une des revendications 1 à 4, **caractérisé par le fait que** l'insert amovible (110, 122) est réalisé en un matériau de résistance suffisante pour supporter les efforts de compression et de traction créés lors de l'opération de moulage, en particulier par coulée d'un béton, tel qu'un béton fibré haut performance ou ultra-haute performance, ou un béton polymère.

6. Moule selon l'une des revendications 1 à 5, **caractérisé par le fait que** le circuit de régulation (125, 126) est formé par au moins une rainure pratiquée dans la surface d'une coque et/ou de son insert associé, de préférence dans la surface de l'insert.

7. Moule selon l'une des revendications 1 à 6, destiné à un moulage par injection, **caractérisé par le fait qu'**il comprend en outre un dispositif d'injection de matière dans l'empreinte, passant à travers des orifices pratiqués respectivement dans la plaque de matrice, l'insert amovible de matrice (122) et la coque de matrice (120).

8. Insert (110, 122) destiné à équiper un moule (101) tel que défini à l'une quelconque des revendications 1 à 7, **caractérisé par le fait qu'**il est apte à remplir la cavité formée par la face (107b, 120b) opposée à la face (107a, 120a) présentant la forme moulante de la coque (107, 120), qu'il est apte à être retiré de celle-ci et à être replacé dans celle-ci et qu'il présente, sur sa face destinée à venir en contact avec la cavité, au moins une rainure apte à former un circuit de régulation de température (125, 126) de la coque associée (107, 120).

9. Insert selon la revendication 8, **caractérisé par le fait qu'**il est réalisé en un matériau de résistance suffisante pour supporter les efforts de compression et de traction créés lors de l'opération de moulage, étant notamment obtenu par coulée d'un béton, tel qu'un béton fibré haut performance ou ultra-haute performance, ou un béton polymère.

10. Procédé de fabrication d'un moule tel que défini à l'une quelconque des revendications 1 à 7, **caractérisé par le fait que** l'on définit les formes moulantes de matrice et de noyau, que l'on réalise au moins une coque (107, 120) présentant la forme moulante associée et définissant, sur sa face (107b, 120b) opposée à la face (107a, 120a) présentant la forme moulante, une cavité apte à être fermée par une plaque (105, 119), que l'on réalise un insert amovible associé (110, 122) tel que défini à l'une des revendications 8 et 9, que l'on réalise au moins un circuit de régulation de température de coque (125, 126) sur la face de l'insert amovible (110, 122) destinée à venir contre la cavité, que l'on introduit l'insert amovible (110, 122) présentant le ou les circuits de régulation de température de coque (125, 126) dans ladite cavité et que l'on fixe une plaque (105, 119) à la coque associée (107, 120) de façon à fermer la cavité avec l'insert amovible (110, 122) présentant le ou les circuits de régulation de température de coque (125, 126) placé dans celle-ci.

11. Procédé selon la revendication 10, **caractérisé par le fait que**, pour réaliser l'insert amovible (110, 122) associé à la cavité et présentant le ou les circuits de régulation (125, 126), on fixe temporairement au moins un profilé de matériau sur la face (107b, 120b) opposée à la face (107a, 120a) présentant la forme moulante de la coque (107, 120), le ou les profilés ayant la section de la ou des rainures formant le ou les circuits de régulation de température (125, 126), que l'on dispose un moyen de démoulage, tel qu'un agent démoulant appliqué notamment par projection, sur la face (107b, 120b) opposée à la face (107a, 120a) présentant la forme moulante de la coque (107, 120) et sur le ou les profilés de matériau, que l'on coule dans la cavité le matériau destiné à former l'insert amovible (110, 122) de telle sorte qu'il remplit la cavité et que le ou les circuits de régulation de température (125, 126) sont surmoulés, que l'on laisse ledit matériau durcir dans la cavité, que l'on retire l'insert amovible (110, 122) une fois durci et que l'on retire le ou les profilés de matériau.

12. Procédé de fabrication selon la revendication 10, **caractérisé par le fait que**, pour réaliser l'insert amovible (110, 122) associé à la cavité et présentant le ou les circuits de régulation de température (125, 126), on dispose un moyen de démoulage, tel qu'un agent démoulant appliqué notamment par projection, sur la face (107b, 120b) opposée à la face (107a, 120a) présentant la forme moulante de la coque (107, 120), que l'on coule dans la cavité le matériau destiné à former l'insert amovible (110, 122) de telle sorte qu'il remplit la cavité, que l'on laisse ledit matériau durcir dans la cavité, que l'on retire l'insert amovible (110, 122) une fois durci et que l'on usine une ou des rainures sur la face (110a, 122a) de l'insert amovible destinée à venir en contact avec la face (107b, 120b) opposée à la face (107a, 120a) présentant la forme moulante de la coque (107, 120) de façon à réaliser un ou plusieurs circuits de régulation de température (125, 126).
